# EUROPEAN PATENT SPECIFICATION

(11) **EP 3 768 483 B1**
(45) Date of publication and mention of the grant of the patent: **03.11.2021**
(21) Application number: 20703058.6
(22) Date of filing: 11.02.2020
(51) Int. Cl.: B29B 17/00, B29B 17/02, B29B 17/04, B29K 23/00, B29K 509/00

(54) **PROCESS FOR RECOVERING PLASTIC MATERIAL AND RELATED PLANT**
VERFAHREN ZUR RÜCKGEWINNUNG VON KUNSTSTOFFMATERIAL UND ZUGEHÖRIGE ANLAGE
PROCÉDÉ DE RÉCUPÉRATION DE MATÉRIAU PLASTIQUE ET INSTALLATION ASSOCIÉE

(30) Priority: 12.02.2019 IT 201900002021
(43) Date of publication of application: 27.01.2021
(73) Proprietor: Rialti S.p.A., 22020 Taino (VA) (IT)
(72) Inventor: DAL TOSO, Massimo, 21020 Taino (VA) (IT); DAL TOSO, Mattia, 21020 Taino (VA) (IT)
(74) Representative: Longoni, Alessandra
(86) International application number: PCT/EP2020/053390
(87) International publication number: WO 2020/115335

(56) References cited:
- EP-A1- 1 273 412
- JP-A- H 081 670
- JP-A- 2007 301 955
- US-A1- 2002 125 600
- US-A1- 2013 119 575

## Description

### Technical Field

The present invention relates, in general, to a process for recovering plastic material and to a plant configured to carry out the process.

In particular, the present invention relates to a process for recovering and granulating plastic waste, in particular waste of polypropylene plastic material, and to a plant configured to carry out the process.

### Background Art

Processes and related plants for recovering and granulating waste of plastic material are known, in particular for recovering and granulating polypropylene plastic materials, to which reference is made hereinafter.

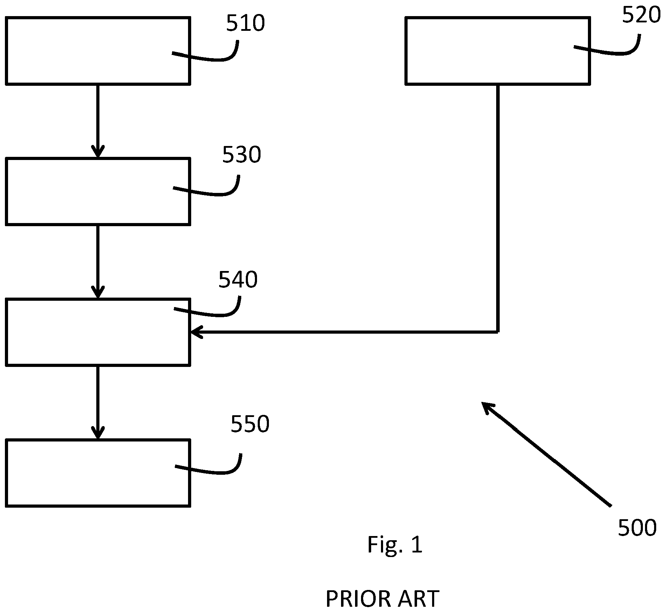

For example, a process 500 shown in Fig. 1 is known, in which recovering and granulating waste of polypropylene plastic material comprises the following steps:
- a step 510 in which plastic waste is introduced into the plant;
- a step 520 in which polypropylene raw materials are introduced into the plant;
- a step 530 following the step 510 in which the plastic waste is shredded so as to reduce its volume and arrive to pieces, for example, with sides among 10 to 30 cm.
- a step 540 in which the shredded waste is combined with the polypropylene raw materials introduced in step 520 and subjected to a thickening process. According to the known art, the thickening step 540 is a hot mechanical step carried out with the addition of water. This step aims to increase the specific weight of the recovered polypropylene and to obtain Secondary Raw Materials (MPS) compliant, for example, with the UNIPLAST UNI 10667 Standard with lumps of predefined size, for example among 5 to 15 mm;
- a compounding step 550 in which the plastic materials obtained in step 540 are mixed with additives and mineral fillers of known type and extruded.

A problem of the known process and of the corresponding plant relates to the fact that at least the thickening step 540 requires, according to the prior art, to be carried out by hot working.

This fact entails at least two further problems.

The first problem, which is certainly not negligible, is that the quality of the recovered material, although compliant with the standards in use, shows, in case of a process with at least one hot step, chemical-physical characteristics lower than those obtainable by a cold process, as experimentally verified by the Applicant.

The second problem, probably more relevant, is that a process, which comprises at least one hot step, results in high energy consumption which negatively affects both the cost of the recovered material and the increasingly present need to reduce as much as possible energy resource consumption.

US2013/0119575 A1 teaches a process and apparatus for recycling plastic waste material. The above known process provides, in particular, to wash the waste material and to dry substantially all moisture from the plastic.

US2002/0125600 A1 teaches a plastic recycling system including a first granulator for reducing plastic waste to a first particle size and a second granulator for reducing plastic waste to a second size. The above known system provides a frictional melting structure for melting the first particles and the second particles.

In general, Applicant has noted that prior art is not able to effectively solve the more general problem of providing processes for recovering plastic materials by avoiding the presence of hot steps or by improving chemical-physical characteristics of the recovered plastic material.

Applicant has also noted that prior art is not able to solve the specific problems listed above due to the fact of providing processes for the recovery of plastic materials which also include hot steps or steps not optimized for improving chemical-physical characteristics of the recovered plastic material.

### Disclosure of the Invention

The object of the present invention is thus a process and a plant for recovering plastic materials arranged to solve at least the prior art problems listed above.

The present invention relates to a process for recovering plastic materials according to claim 1.

The present invention also relates to a plant for recovering plastic materials according to claim 6.

The following summary of the invention is provided in order to provide a basic understanding of some aspects and features of the invention.

This summary is not an extensive overview of the invention, and as such it is not intended to particularly identify key or critical elements of the invention, or to delineate the scope of the invention, which is defined by the appended claims.

Its sole purpose is to present some concepts of the invention in a simplified form as a prelude to the more detailed description that is presented below.

According to a feature of a preferred embodiment, the process for recovering plastic materials comprises a sequence of a plurality of steps arranged to treat the plastic material to be recovered by avoiding use of thickening water.

According to a further feature of present invention, the plastic material to be recovered is mainly managed in a shape of flakes mixed with air that are compacted, by separating the flakes from the air, before making a forced flow step and an extrusion step.

According to another feature of present invention, the extrusion step allows to achieve high productivity with limited energy consumption, by not involving flakes thickening with water.

### Brief Description of Drawings

These and further features and advantages of present invention will appear more clearly from the following detailed description of a preferred embodiment, provided by way of a non-limiting example with reference to the attached drawings, wherein components designated by same or similar reference numerals indicate components having same or similar functionality and construction and wherein:
Fig. 1 shows an example of a process for recovering plastic materials in accordance with known art;
Figs. 2a and 2b show a flow diagram of the process for recovering plastic material waste according to an embodiment considered preferable;
Fig. 3 shows an example of a plant configured to carry out the process represented in Figs. 2a and 2b;
Fig. 4 shows an example of an apparatus provided in the plant of Fig. 3;
Figs. 5a and 5b show an example of an additional apparatus provided in the plant of Fig. 3;
Figs. 6a and 6b show an example of other apparatuses provided in the plant of Fig. 3;
Fig. 7 shows an example of a further other apparatus provided in the plant of Fig. 3; and
Fig. 8 shows an example of another apparatus provided in the plant of Fig. 3.

In the present description, terms like: upper, lower, longitudinal, orthogonal, lateral, up, down, etc. are used to indicate elements or parts having orientation and position as conventionally defined in common use, so that, in the present description such term are to be interpreted in the way conventionally provided according to the common use unless otherwise indicated.

### Best Mode for Carrying Out the Invention

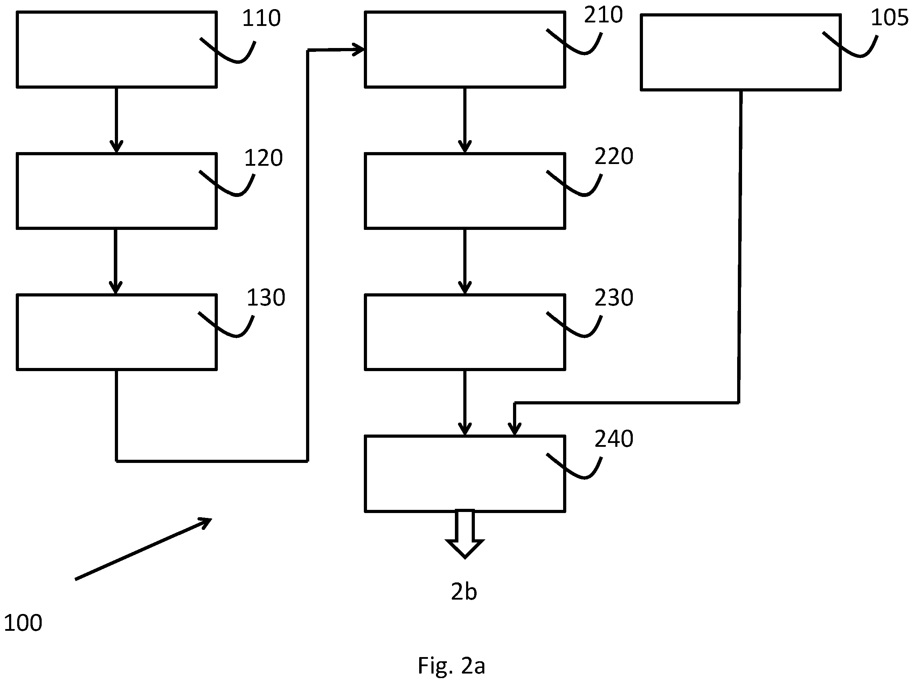

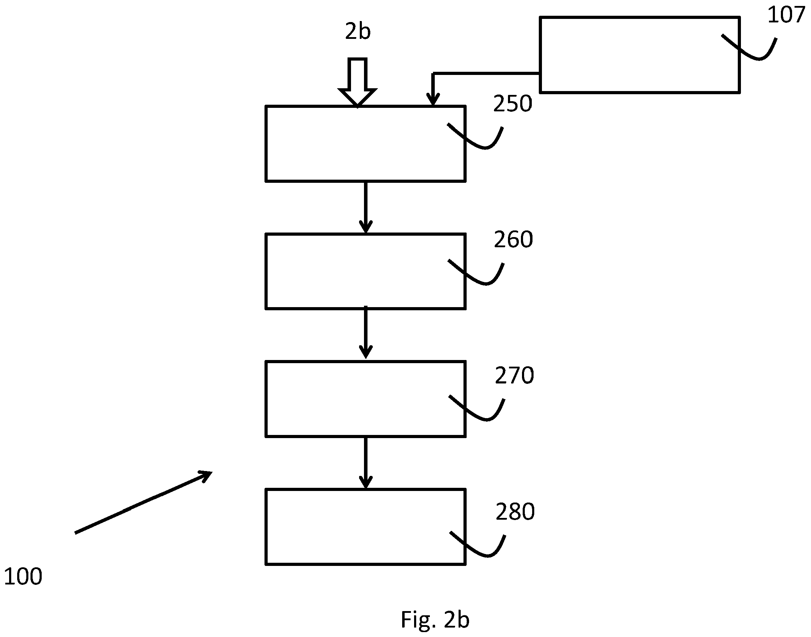

With reference to Figs. 2a, 2b, a process for recovering plastic materials 100, for example waste of polypropylenic plastic material to which hereinafter reference is preferably made according to the embodiment described herein, is disclosed.

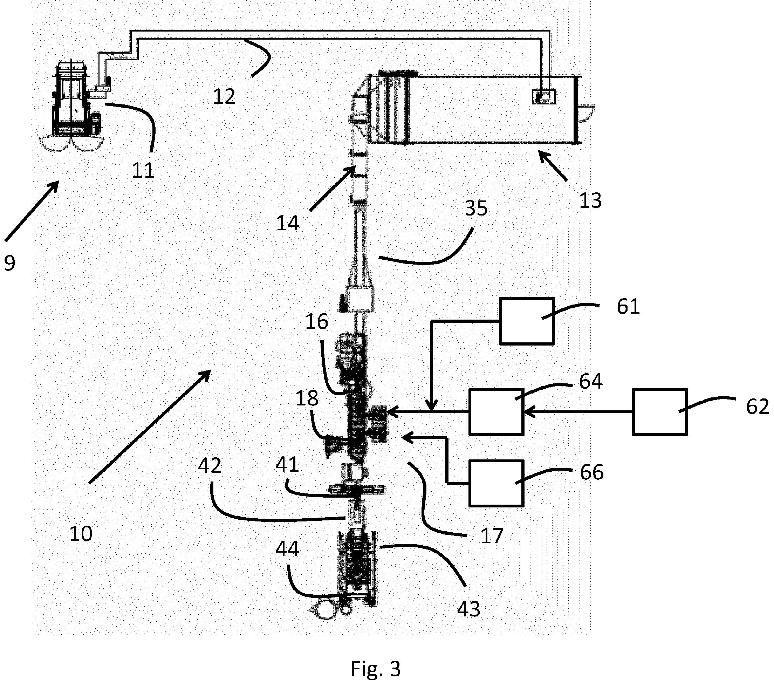

The process 100 comprises a plurality of steps preferably performed in sequence by way of respective apparatuses or cells of a plant 10 (Fig. 2a, Fig. 2b, Fig. 3) as will be clarified below in detail.

Some steps of the process 100, as easily understandable by a person skilled in the art, may be performed by a plurality of equivalent apparatuses arranged in parallel. In this description, however, it has been preferred to disclose the process as a set of steps carried out in sequence by individual apparatuses or cells of the plant 10, in order to avoid unnecessary overload.

The recovery process comprises some initial steps arranged to prepare plastic waste that are preliminary to the real recovery process.

The initial steps comprise, for example:
- 105 preparation of process materials and additives, dosing and sending the same materials and additives so as they can be mixed with the waste. Preferably, the process materials comprise polypropylene raw materials, for example first and second choice polypropylene raw materials; the additives comprise, for example, additives arranged to provide self-extinguishing characteristics to the waste, coloring additives, and glass fibers. In step 105 it is expected that the process materials, stored, for example, in silos, are loaded into a mixer and sent to a dosage device 61, for example a dosising device Model FRG030D of the Definitive Innovation Company, and subsequently to a forced flow cell or feeding hopper 16, as will be disclosed in detail herein below. In step 105 it is also provided, for example, that the additives are loaded in parallel into a respective refill and dosage device 62 and, subsequently sent to the feeding hopper 16, by way of two respective augers 64, of known type.
- 107 preparation of process mineral fillers. In step 107, for example, it is provided that process mineral fillers, preferably stored in respective silos, are sent to a respective refill and dosage device 66, of known type, and subsequently sent, via lateral feeding lines 17, to an extrusion cell 18, for example an extruder, provided in one of the steps of the process 100, as will be disclosed in detail herein below. According to the present embodiment, the mineral fillers comprise, for example, talc, calcium carbonate and/or barium chloride.

- 110 sorting of plastic waste to be recovered through the removal, preferably manually, of impurities such as, for example, paper residues or metallic materials.
- 120 waste shredding and reduction into flakes (blocks) of predetermined dimensions, for example of about 5x10 cm², considered preferable in the present embodiment wherein the process 100 is expected to be carried out by cold working. This step is carried out, for example, by way of apparatuses 9 (Fig. 2a, Fig. 2b, Fig. 3) comprising circular blades and mechanical screens and allows the preparation of the waste for the execution of the subsequent steps. Step 120 may be carried out, for example, by a shredder Model VAZ 2000 RS FF-T from Vecoplan Company.
- 130 transport of waste shaped as flakes mixed with air to the first step of the real recovery process. The step 130 preferably comprises the transport of the flakes mixed with air, for example by aspiration through pipes or piping systems 12, to the first system provided for carrying out the steps of the real process 100. Step 130 is preferably executed by way of fans 11, for example centrifugal fans which, by suction, introduce flakes into the pipes 12. This step may be carried out, for example, with one or more centrifugal fans Model KMF 9706 from OMT BIELLA Company. Preferably, it is also provided that, for a certain length outside the one or more fans 11, the pipes 12 comprise special magnets, known per se, capable of capturing any metal residues still present in the flakes.

With the flake transport step 130, the preliminary steps of the real recovery process are preferably completed.

Subsequent steps provided in the process 100 comprise, according to the preferred embodiment:
- 210 mixing of the flakes mixed with air by way of one or more mixing cells 13 (Fig. 2a-2b, Fig. 3, Fig. 4, Fig. 5a-5b) and transport or sending to the next step. In this step the flakes obtained from the waste (flakes or waste) are homogenized, uncompacted and dried.

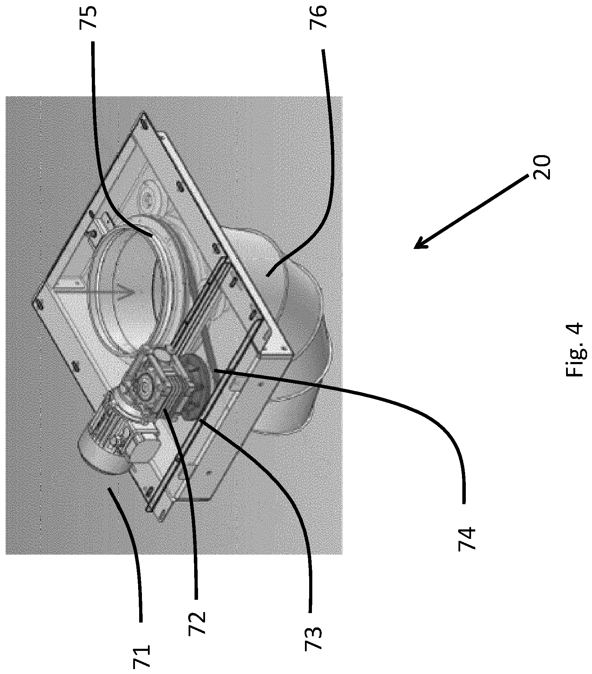

Preferably, prior to the real mixing step 210, the flakes transported by suction during the step 130 are pneumatically conveyed by way of a rotating joint 20 (Fig. 4) to the mixing cell 13.

In particular, the rotating joint 20 preferably comprises an electric motor 71 associated with a screw gearmotor 72, which through a first pulley 73 and a transmission carpet 74 transmits motion to a second pulley 75 of a sector-oriented rotating curve 76.

In use, the flakes mixed with air sucked by one or more fans 11 are loaded inside the cell 13 by way of the rotating joint 20 which, in the preferred embodiment, allows to guarantee turbulence and strong suspension conditions of the flakes mixed with air inside cell 13.

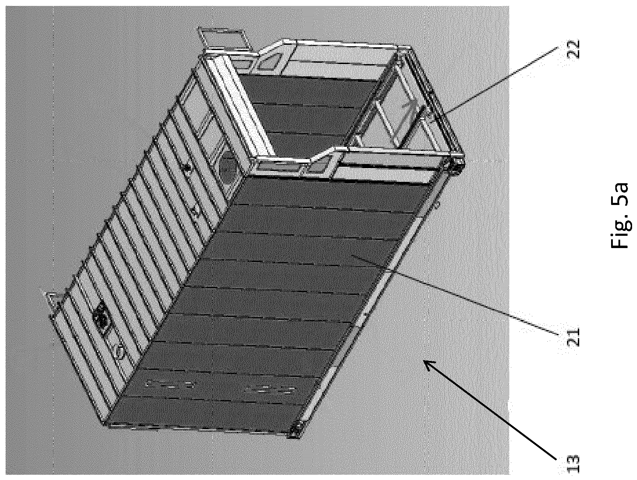

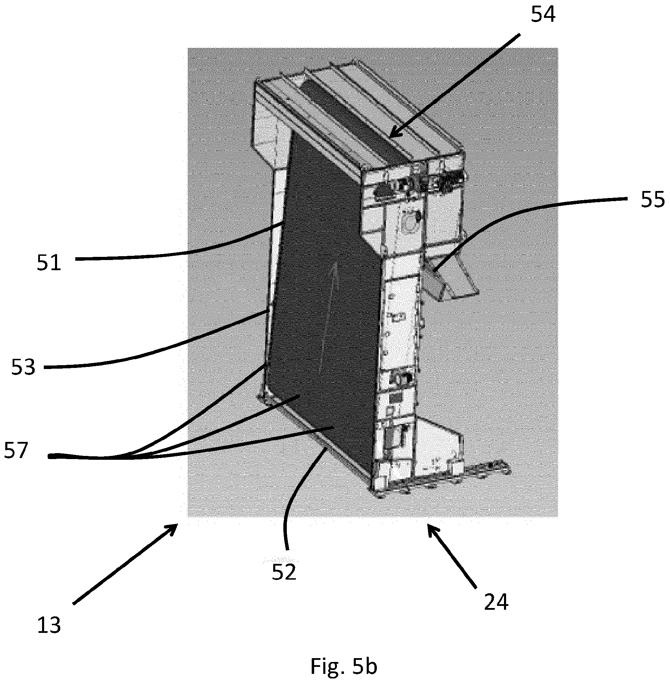

According to the present embodiment, the mixing cell 13 (Fig. 5a-5b) comprises a chamber 21 comprising at the base a carpet 22, for example a metal carpet, and on a bottom wall a miller 24, for example a miller comprising a plurality of protruding tips 57.

In use, waste is introduced by way of the pipes 12 and the rotating joint 20 into the chamber 21 so as to fill the chamber; at the same time the carpet 22, which transports the waste to the miller 24, is activated, for example by way of suitable sensors and respective actuators, known per se; the miller 24 is arranged to mix and withdraw the waste from the chamber 21, i.e. from the mixing cell 13, so as to send the waste to the next apparatus.

In particular, during the chamber filling step, the carpet 22 advances very slowly bringing the waste into contact with the miller 24 which then transfers the waste to a transport and weighing cell 14 provided in the next step.

Still more in particular, the miller 24, according to the present embodiment, comprises a wall 51 on which the material is driven, a pulley 52, at the base of a carpet 53 comprising a plurality of protruding tips 57, a rotating cylinder 54 comprising a brush, known per se, and a hopper 55, for example an unloading hopper.

In use, the miller 24 is configured so that the waste, preferably driven towards the wall 51 by the carpet 22, reaches the base of the carpet 53 where the pulley 52 allows the vertical upwards movement of the waste.

The stratification of the flakes in the chamber 21 creates the mixing, when the flakes are picked up by the tips 57.

In particular, according to this realization example, the flakes mixed with air, thanks to the vertical movement, reach the upper end of the carpet 53 and come into contact with the brush of the rotating cylinder 54.

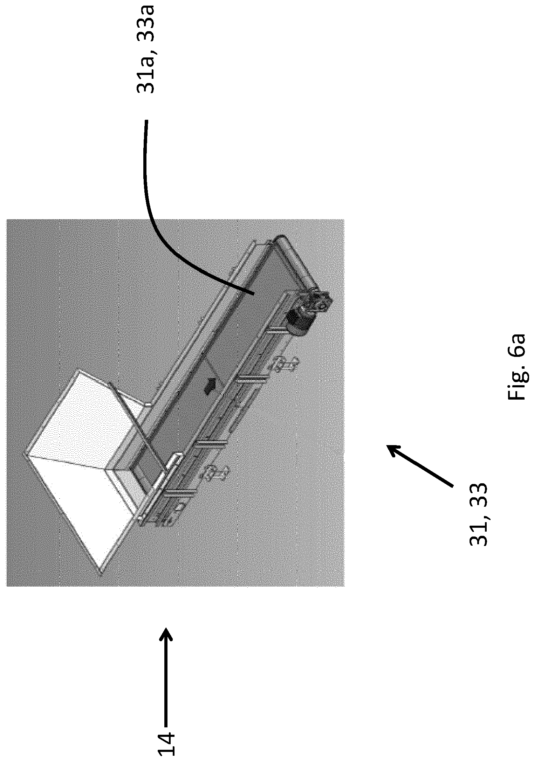

Still more in particular, the brush of the rotating cylinder 54 comes into contact with the tips 57 of the carpet 53 and provides detachment of the flakes mixed with air, so as to send them through the unloading hopper 55 to the next cell for the execution of the next step.
- 220 transport and weighing of flakes mixed with air by way of one or more conveyor carpets. According to the present embodiment, the waste exiting the mixing cell 13 is conveyed to the inlet of the transport and weighing cell 14 (Fig. 6a-6b) comprising, for example, three conveyor carpets 31, 32 and 33, arranged in series and in cascade comprising respective carpets 31a, 32a, 33a.

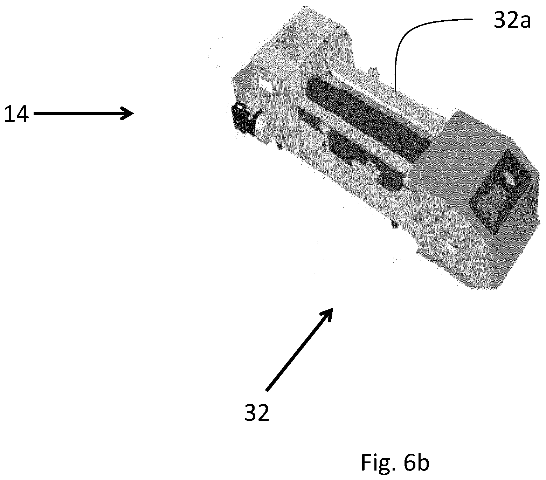

In the realization example of the system 10 disclosed herein, a first type of conveyor carpet in Fig. 6a and a second type of conveyor carpet in Fig. 6b are shown.

Obviously, according to further embodiments, only one conveyor carpet may be present without thereby departing from the scope of what is disclosed and claimed.

Preferably, at least one conveyor carpet 32, among those possibly present in the system 10, is a weighing carpet configured to weigh and transport the waste arriving from the mixing cell 13.

Preferably, the conveyor (weighing) carpet 32, on the basis of the weighing carried out, is adapted to regulate the speed of its carpet 32a, as well as the movement speed of the carpet 22 of the mixing cell 13 and of any further carpets 31a, 33a present in the cell 14, by way of suitable controls, so that the movement of flakes mixed with air is synchronized.

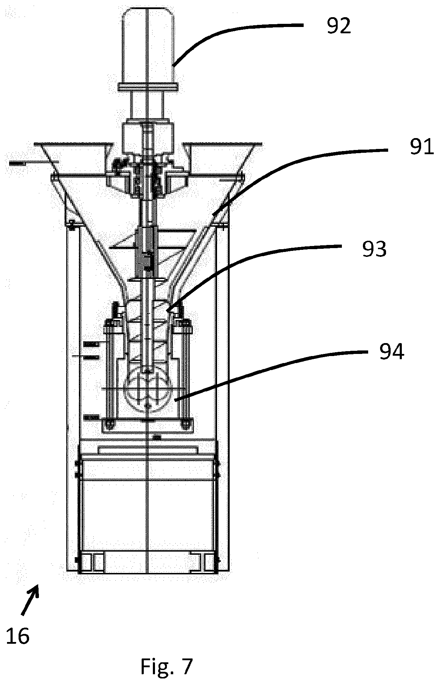

By way of the cell 14 and of any pipes 35, known per se, the flakes mixed with air are sent to a compaction cell 15 provided in the next step.
- 230 compaction and dosage of flakes mixed with air so as to separate the air from the flakes. In this step a compaction cell or mechanical condenser 15 (Fig. 7), for example a vane condenser Model CP14 from OMT BIELLA Company, is provided to eliminate the air and compact the flakes obtained from plastic waste and to generate, at the same time, an aeraulic over-pressure. Step 230 has the function of compacting and dosing the flakes so as they are free of air and are ready for the next step.
- 240 reception at the inlet of the flakes free of air, and of process materials and additives as dosed and sent in step 105, and realization of a forced feeding.

In particular, in step 240 it is provided that the flakes, as compacted and dosed in step 230, and the process materials and additives, for example received from a mezzanine above the hopper, are received at the inlet of the forced flow cell 16, for example a feeding hopper 16, so that the cell realizes a forced feeding of the flakes mixed with the process materials and additives.

In summary, in step 240 the hopper 16, as provided in the preferred embodiment, is arranged to force a constant and predefined flow of materials to the output towards the next step of the process.

For example, according to the preferred embodiment, the forced feeding hopper 16 is provided to comprise a flakes and process materials receiving area 91, a motor 92, for example an electric motor with adjustable speed, an auger 93 maintained in rotation by the motor 92, and an unloading zone 94 towards the next step of the process.

In use, thanks to the aeraulic pressure generated by the compaction cell 15 and to the action of the auger 93 kept in rotation by the motor 92, the flakes mixed with the process materials and additives are forced to the unloading zone 94, provided at the base of the hopper 16, to be inserted in the extrudesion cell 18.

In particular, according to the preferred embodiment, in use, the rotation speed of the auger 93 is proportional to the quantity of material coming from the previous steps.

Still more in particular, the rotation speed of the auger 93 is determined as a function of the quantity of flakes coming from the transport and weighing cell 14 and from the compaction cell 15 connected in cascade to the transport and weighing cell 14.

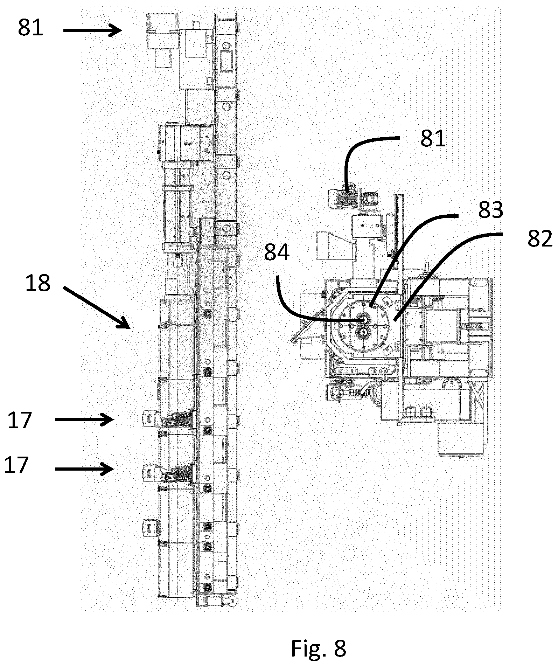

In summary, the transport and weighing cell 14 is configured so as to regulate, by means of suitable controls, in addition to the speed of the carpet 22 also the rotation speed of the auger 93 so that, in the forced feeding step 240, a speed consistent and uniform advancement of flakes mixed with process materials and additives is ensured.
- 250 extrusion of materials arriving from the forced feeding step 240 and of the process mineral fillers arriving from step 107. In step 250 it is provided (Fig. 8), that an extrusion cell 18 is arranged to extrude the arriving materials so that they are subsequently configured, in a known way, as finished products for sale.

According to the preferred embodiment, the extrusion cell 18, for example an extruder, is a co-rotating extruder comprising one or more motors 81, for example electric motors with adjustable speed, a central body 82, a cylinder 83 comprised into the central body 82, and two extrusion screws 84 comprised into the cylinder 83.

In use, the two extrusion screws 84 rotate, driven by the one or more motors, in the same direction, inside the cylinder 83, preferably heated by way of electrical resistors, in a known way.

The one or more motors 81, provided, for example, at the inlet of the extruder 18, are configured to guarantee the energy and thrust necessary for the extrusion of materials arriving from the hopper 16.

In particular, the extrusion speed, regulated by the electric motors 81, is determined on the basis of the quantity of materials arriving from the previous steps and in particular from the forced feeding step 240.

In summary, the transport and weighing cell 14 is arranged to adjust, by way of suitable controls, also the extrusion speed of the extrusion cell so that, in the extrusion step 250, a coherent and uniform feed speed of the materials is provided.

According to the preferred embodiment, it is provided that the mineral fillers are added through respective lateral feeding lines 17 in an intermediate zone of the extrusion path, along the screws 84.

This technical choice is considered preferable because the mineral fillers do not need to undergo the complete extrusion process.

According to other embodiments, the mineral fillers may also be introduced at the beginning of the extrusion path.

According to the preferred embodiment, the extruder 18, by operating at a speed proportional to the quantity of the arriving materials, allows to obtain a high productivity at the end of the process 100, also thanks to the absence of thickening water. The productivity may be comprised, for example, among 2500 to 4000 kg/h as a function of the quality of the waste, and the energy consumption may be very low, i.e. comprised among 0.12 to 0.15 kW/kg/h.

Thanks to the process 100 as disclosed, wherein it is provided a thickening or compaction of the waste without inputting heat, it is possible to obtain a plastic material or finished product at the output from the extruder 18 with technical characteristics of higher quality than that obtainable by known processes, such as for example the known process 500.

According to the preferred embodiment, it is provided that a degassing unit 19 of known type is associated to the extruder 18, for example a degassing unit Model TRH from the Pompe Travaini Company.

In particular, it is provided that, in use, the degassing unit 19 is arranged to ensure the elimination of gas generated during the extrusion step.

For the sake of completeness of description, further steps of the process 100 are also described herein that, although preferably provided for, are only intended to prepare for sale the materials so recovered.

In particular, the following steps may be present subsequently the extrusion step 250:
- 260 filtering step, comprising a filtering cell 40 in which, for example, two cascade filters, 41 and 42 may be comprised, as for example a first self-cleaning automatic filter Model RAS500 from the FIMIC Company and a second filter Model BDO 190/300 from the BD PLAST Company.

The filters are arranged to capture, in a known way, any substances caused by the recovery process, i.e. "dirty" material, such as any oil used in the extruder, chemical residues due to additives and any dust so as to release "clean" material, such as the plastic material to be sold.
- 270 cutting and cooling step 270 which is arranged to divide the recovered plastic material into compounds of size and weight of predetermined characteristics and to cool the material, preferably with water.

In particular, in this step it is provided to use a cutting and cooling cell or unit 43, for example a unit Model DFC380 from the Plasco Company, arranged to divide the plastic material into polypropylene compounds of predefined size, dimensions, quantity and characteristics, and to cool it.
- 280 further cooling and drying step, obtained by using a cooling and drying cell 44, for example a vertical centrifuge.

In particular, the cell or centrifuge 44 is arranged to eliminate any residual cooling water and to dry the plastic materials so as to obtain a finished product which is then discharged to the top of the centrifuge itself to be distributed and/or sold.

The centrifuge 44 can be, for example, a vertical centrifuge Model DCT700 from the Plasco Company.

The cooling and further cooling steps are provided since the extrusion step 250, and the previous forced feeding step 240, however cause the heating of the materials.

Preferably, the cooling and further cooling steps are carried out through the use of water.

The process 100 as disclosed generally requires an energy requirement much lower than that required by the known process.

As a matter of fact, the process 100 allows, by using the steps exemplified above, to treat material much lighter than that foreseen in the known process 500, which requires a hot thickening step; due to that the process 100 allows to strongly reduce the energy requirement being equal the treated waste.

Indeed, while in the known process 500 it is provided that the thickening step is a hot process and with the addition of water, in the process 100, exemplified herein above, a sequence of steps is provided wherein the flakes are initially treated being mixed with air, therefore in the shape of a very light material, and, subsequently, a sequence of steps is provided wherein the flakes are compacted and forced, together with process materials and additives, so as to achieve a constant and predefined flow of material towards the extrusion step.

Advantageously, the fact that the process 100 does not require hot operations with the addition of water, this fact reduces the energy requirement and at the same time guarantees the recovery of plastic material with definitely better chemical-physical characteristics, being the plastic material obtained by a cold working. As a matter of fact, a hot process cannot guarantee that plastic material does not change its chemical-physical characteristics following one or more steps of hot working.

In summary, according to the preferred embodiment, the process 100 comprises a sequence of initial steps wherein the flakes mixed with air are treated in the form of a very light material, and a sequence of final steps wherein the flakes are deprived of the air, are compacted and extruded as a constant and predefined flow of material.

Advantageously, Applicant has experimentally noted that, in comparison with the known process 500, the process 100 disclosed herein allows a reduction of energy requirement of at least 30% as to the energy requirement of the known process.

For example, taking as reference the energy requirement for the processing of a ton of waste in polypropylene material until that the compound is obtained, the calculated energy with the known process is equal to about 730 KW; on the contrary, the energy requirement in case of the process 100 is reduced, as experimentally verified by the Applicant, to about 500 KW.

According to a characteristic of a preferred embodiment, the initially screened and shredded waste is conveyed inside a mixing cell where it is homogenized, unpacked and dried with a cold treatment. The material exiting from this cell is conveyed through carpet dosing apparatuses and pipes suitable for providing a forced feeding to an extruder.

In parallel or in steps preceding those described above, raw materials and additives are prepared, which are then loaded into the extruders, together with the flakes arriving from mixing cells and by compacting cells that are arranged to act as "forcing cells", thanks to the combined action of the auger and of the aeraulic overpressure.

Advantageously, the extruder is configured so as to allow adjustment of the extrusion process.

Preferably, the material exiting the extruder is filtered to eliminate impurities, before being cut into polypropylene compounds and dried inside a centrifuge to obtain the finished product.

Of course, obvious changes and/or variations to the above disclosure are possible, as regards dimensions, shapes, materials, components, and connections, as well as details of the described construction and operation process without departing from the scope of the invention as defined by the claims that follow.

## Claims

1. A process for recovering plastic material, in particular polypropylene plastic material, comprising in sequence at least the steps of
- (110) removing impurities from the plastic material to be recovered,
- (120) shredding and reducing the material deprived of impurities into flakes of predetermined size,
- (130) transporting the flakes in the form of air mixed flakes towards a mixing step,
- (210) mixing by way of a mixing cell (13) operating in turbulence and strong suspension conditions the air mixed flakes, said mixing step comprising the steps of
- filling a chamber (21) with the air mixed flakes and at the same time activating a carpet (22) comprised in the chamber (21),
- transporting the air mixed flakes to a miller (24) by way of the carpet (22),
- vertically moving the air mixed flakes by way of the miller (24) so as to mix and send the air mixed flakes by way of an unloading hopper (55) to the next step,
- (220) transporting, weighing and sending to the next step the air mixed flakes by way of a transporting and weighing cell (14) comprising one or more conveyor carpets (31, 32, 33), said one or more conveyor carpets (31, 32, 33) being moved so as to synchronize the movement of the air mixed flakes both in the mixing cell (13) and in the transporting and weighing cell (14),
- (230) compacting air mixed flakes by way of a compaction cell (15) arranged to separate the flakes from the air and weighing the air-separated flakes,
- (240) providing by way of a forced flow cell (16) a forced feeding of materials, said materials comprising the air-separated flakes, arriving from the compacting and weighing step (230), and process materials and additives, wherein said process materials and additives are provided to contribute to said recovering process,
- (250) extruding by way of an extrusion cell (18) both said materials exiting from the forced flow cell (16) and mineral fillers, said mineral fillers being provided to contribute to complete the recovering process of the plastic material.

2. The process according to claim 1, comprising, subsequently to the extrusion step (250), the further steps of
- (260) filtering the recovered plastic material by way of a filtering cell (40), said filtering step being provided for capturing any substance due to the recovering process,
- (270) cutting the recovered plastic material into compounds of predetermined characteristics and cooling the recovered plastic material by way of a cutting and cooling cell (43),
- (280) further cooling and drying the recovered plastic material arriving from the cutting and cooling step (270) by way of a cooling and drying cell (44) so as to provide a finished product ready for distribution and/or sale.

3. The process comprising, parallel to the process steps provided according claims 1 or 2, the further steps of
- (105) preparing and sending to the forced flow cell (16) provided in the forced feeding step (240),
- process materials comprising polypropylene raw materials,
- additives comprised in the group comprising dyes, glass fibres and/or in the group comprising additives arranged to provide self-extinguishing characteristics to the recovered material, and
- (107) preparing and sending to the extrusion cell (18) provided in the extrusion step (250)
- process mineral fillers comprised in the group comprising talc, calcium carbonate and/or barium chloride.

4. The process according to any one of Claims 1 to 3, wherein the step of carrying out a forced feeding of materials (240), comprises the steps of
- receiving at the inlet the air-separated flakes, the process materials and the additives,
- mixing the materials comprising the air-separated flakes, the process materials and additives and forcing said materials, by way of a metering screw (93) kept rotating by way of a motor (92), to the extrusion cell (18) provided for in the extrusion step (250).

5. The process according to any one of Claims 1 to 4, wherein the extrusion step (250) comprises the steps of
- inserting into the extrusion cell (18) the materials outgoing from the forced flow cell (16) and the mineral fillers,
- extruding, by way of two screws (84) comprised inside a cylinder (83), the materials in output from the forced flow cell (16) and the mineral fillers in the absence of thickening water, so that it is possible to obtain with a limited power consumption, comprised in particular between 0.12 and 0.15 kW/kg/h, a productivity between 2500 and 4000 kg/h, as a function of the quality of the plastic material to be recovered.

6. A system configured to carry out a process (100) to recover plastic material, comprising at least the following components or cells
- a rotatable joint (20) comprising a rotating segmented curve (76) and configured to move, in turbulence and suspension conditions, the recoverable material shredded in air mixed flakes,
- a mixing and transporting cell (13), connected to the rotatable joint (20), and comprising
- a chamber (21) arranged to be filled by way of the rotatable joint (20) with the flakes mixed with air,
- a carpet (22) at the base of the chamber (21), and
- a miller (24) configured to receive the air mixed flakes and send them to an unloading hopper (55), by way of
- a carpet (53) wherein a plurality of protruding pins (57) is comprised, and
- a rotating cylinder (54) arranged to cooperate with the protruding pins (57),
- a transporting and weighing cell (14) connected to the mixing and transporting cell (13) and comprising at least one conveyor carpet (31, 32, 33) arranged for transporting and weighing the air mixed flakes, and for synchronizing the movement of the at least one conveyor carpet (31, 32, 33) with the movement of the carpet (22) as a function of the weighing of the air mixed flakes,
- a compaction cell (15), connected to the transporting and weighing cell (14), arranged for compacting the flakes, by eliminating the air in which the flakes are mixed,
- a forced flow cell (16) connected to the compacting cell (15) and comprising
- a receiving area (91) arranged to receive the air deprived flakes and process materials,
- a metering screw (93) driven in rotation by a motor (92) at an adjustable speed as a function of the weighing carried out by the transporting and weighing cell (14), and
- an unloading area (94) located at the base of the forced flow cell (16) and arranged for forcing a constant and predetermined flow of flakes and process materials to the outlet, and
- an extrusion cell (18) connected to the forced flow cell (16), comprising
- a central body (82),
- at least one motor (81) with a speed adjustable as a function of the weighing performed by the transporting and weighing cell (14) and connected to two extrusion screws (84) comprised in a cylinder (83) comprised in the central body (82),
- at least one lateral feeding line (17) arranged for feeding with mineral fillers the flow of flakes and process materials arriving from the forced flow cell;
whereby in use said extrusion cell (18) is arranged to extrude the flow of flakes, process materials, and mineral fillers, so that said system (10), comprising at least said components or said cells, is arranged to obtain a recovered plastic material in the absence of thickening water.

7. The system according to claim 6 further comprising, at the outlet of the extrusion cell (18),
- a filtering cell (40) arranged for catching, in use, substances due to the process (100), said substances being comprised in the group comprising oils due to extrusion, chemical residues and powders,
- a cutting and cooling cell (43) arranged to cut the extruded material, so as to obtain a recovered plastic material with predetermined characteristics, and to cool the recovered plastic material,
- a further cooling cell (44) comprising a centrifuge (44) and arranged to eliminate any residual cooling water and to dry the recovered plastic material.

8. The system according to claim 6 or 7, further comprising
- weighing devices (61, 62) configured to send process materials comprising, respectively, polypropylene raw materials and additives to the forced flow cell (16), and
- weighing devices (66) configured to send the mineral fillers to the at least one lateral feeding line (17).

## Patentansprüche

1. Verfahren zum Rückgewinnen von Kunststoffmaterial, insbesondere von Polypropylen-Kunststoffmaterial, umfassend nacheinander mindestens die folgenden Schritte
- (110) Entfernen von Verunreinigungen aus dem Kunststoffmaterial, das rückgewonnen werden soll,
- (120) Zerkleinern und Reduzieren des von Verunreinigungen befreiten Materials in Flocken vorbestimmter Größe,
- (130) Transportieren der Flocken in Form von luftgemischten Flocken zu einem Mischschritt,
- (210) Mischen der luftgemischten Flocken mittels einer Mischzelle (13), die unter Turbulenz- und starken Suspensionsbedingungen betrieben wird, der Mischschritt umfassend die folgenden Schritte
- Füllen einer Kammer (21) mit den luftgemischten Flocken und gleichzeitiges Aktivieren eines in der Kammer (21) befindlichen Teppichs (22),
- Transportieren der luftgemischten Flocken über den Teppich (22) zu einem Fräswerk (24),
- vertikales Bewegen der luftgemischten Flocken durch das Fräswerk (24), um die luftgemischten Flocken zu mischen und mittels eines Entladetrichters (55) zu dem nächsten Schritt zu schicken,
- (220) Transportieren, Wiegen und Schicken der luftgemischten Flocken mittels einer Transport- und Wiegezelle (14), die einen oder mehrere Förderteppiche (31, 32, 33) umfasst, zu dem nächsten Schritt, wobei der eine oder die mehreren Förderteppiche (31, 32, 33) bewegt werden, um die Bewegung der luftgemischten Flocken sowohl in der Mischzelle (13) als auch in der Transport- und Wiegezelle (14) zu synchronisieren,
- (230) Verdichten der luftgemischten Flocken mittels einer Verdichtungszelle (15), die angeordnet ist, um die Flocken von der Luft zu trennen, und die luftgetrennten Flocken zu wiegen,
- (240) Bereitstellen über eine Zwangsdurchflusszelle (16) einer Zwangszufuhr von Materialien, wobei die Materialien die luftgetrennten Flocken umfassen, die aus dem Verdichtungs- und Wiegeschritt (230) kommen, und Prozessmaterialien und Additive, wobei die Prozessmaterialien und Additive bereitgestellt werden, um zu dem Rückgewinnungsprozess beizutragen,
- (250) Extrudieren mittels einer Extrusionszelle (18) sowohl die aus der Zwangsdurchflusszelle (16) austretenden Materialien als auch mineralische Füllstoffe, wobei die mineralischen Füllstoffe bereitgestellt sind, um dazu beizutragen, den Rückgewinnungsprozess des Kunststoffmaterials zu vervollständigen.

2. Verfahren nach Anspruch 1, umfassend, im Anschluss an den Extrusionsschritt (250), die folgenden weiteren Schritte
- (260) Filtern des rückgewonnenen Kunststoffmaterials mittels einer Filterzelle (40), wobei der Filterschritt bereitgestellt ist, um jegliche Substanz, die auf den Rückgewinnungsprozess zurückzuführen ist, aufzufangen,
- (270) Schneiden des rückgewonnenen Kunststoffmaterials in Verbindungen mit vorbestimmten Eigenschaften und Kühlen des zurückgewonnenen Kunststoffmaterials mittels einer Schneid- und Kühlzelle (43),
- (280) weiteres Kühlen und Trocknen des rückgewonnenen Kunststoffmaterials, das aus dem Schneid- und Kühlschritt (270) kommt, mittels einer Kühl- und Trocknungszelle (44), um ein zum Vertrieb und/oder Verkauf bereites Endprodukt bereitzustellen.

3. Verfahren, umfassend, parallel zu den bereitgestellten Verfahrensschritten nach Anspruch 1 oder 2, die folgenden weiteren Schritte
- (105) Vorbereiten und Schicken zu der Zwangsdurchflusszelle (16), die in dem Zwangsdurchflussschritt (240) bereitgestellt wird,
- Verarbeiten von Materialien, umfassend Polypropylen-Rohstoffe,
- Additive, die in der Gruppe enthalten sind, umfassend Farbstoffe, Glasfasern und/oder in der Gruppe, umfassend Additive, die angeordnet sind, um dem rückgewonnenen Material selbstverlöschende Eigenschaften zu verleihen, und
- (107) Vorbereiten und Schicken zu der Extrusionszelle (18), die in dem Extrusionsschritt (250) bereitgestellt wird
- Verarbeiten von mineralischen Füllstoffen, umfasst in der Gruppe, die Talk, Calciumcarbonat und/oder Bariumchlorid umfasst.

4. Verfahren nach einem der Ansprüche 1 bis 3, wobei der Schritt eines Durchführens eines Zwangszuführens von Materialien (240) die folgenden Schritte umfasst
- Empfangen der Prozessmaterialien und der Additive am Einlass der luftgetrennten Flocken,
- Mischen der Materialien, umfassend die luftgetrennten Flocken, die Prozessmaterialien und Additive, und Zwingen dieser Materialien mittels einer Dosierschnecke (93), die mittels eines Motors (92) in Drehung gehalten wird, zu der Extrusionszelle (18), die in dem Extrusionsschritt (250) bereitgestellt wird.

5. Verfahren nach einem der Ansprüche 1 bis 4, wobei der Extrusionsschritt (250) die folgenden Schritte umfasst
- Einbringen der aus der Zwangsdurchflusszelle (16) austretenden Materialien und der mineralischen Füllstoffe in die Extrusionszelle (18),
- Extrudieren, mittels zweier Schnecken (84), umfasst in einem Zylinder (83), die Materialien, die aus der Zwangsdurchflusszelle (16) austreten, und der mineralischen Füllstoffe in Abwesenheit von Verdickungswasser extrudiert werden, sodass es möglich ist, mit einem begrenzten Energieverbrauch, der insbesondere zwischen 0,12 und 0,15 kW/kg/Std. umfasst ist, eine Produktivität zwischen 2500 und 4000 kg/Std. in Abhängigkeit von der Qualität des Kunststoffmaterials, das rückgewonnen werden soll, zu erlangen.

6. System, das zum Durchführen eines Verfahrens (100) zum Rückgewinnen von Kunststoffmaterial konfiguriert ist, umfassend mindestens die folgenden Komponenten oder Zellen
- ein drehbares Gelenk (20), umfassend eine drehende segmentierte Kurve (76) und das konfiguriert ist, um das in luftgemischte Flocken zerkleinerte rückgewinnbare Material unter Turbulenz- und Suspensionsbedingungen zu bewegen,
- eine Misch- und Transportzelle (13), die mit dem drehbaren Gelenk (20) verbunden ist und Folgendes umfasst
- eine Kammer (21), die angeordnet ist, um mittels dem drehbaren Gelenk (20) mit den luftgemischten Flocken gefüllt zu werden,
- einen Teppich (22) am Boden der Kammer (21), und
- ein Fräswerk (24), das konfiguriert ist, um die luftgemischten Flocken zu erhalten und zu einem Entladetrichter (55) zu schicken, mittels
- eines Teppichs (53), wobei eine Vielzahl von hervorstehenden Stiften (57) umfasst sind, und
- einen drehenden Zylinder (54), der angeordnet ist, um mit den hervorstehenden Stiften (57) zusammenzuwirken,
- eine Transport- und Wiegezelle (14), die mit der Misch- und Transportzelle (13) verbunden ist und mindestens einen Förderteppich (31, 32, 33) umfasst, der zum Transportieren und Wiegen der luftgemischten Flocken und zum Synchronisieren der Bewegung des mindestens einen Förderteppichs (31, 32, 33) mit der Bewegung des Teppichs (22) in Abhängigkeit von dem Wiegen der luftgemischten Flocken angeordnet ist,
- eine Verdichtungszelle (15), die mit der Transport- und Wiegezelle (14) verbundenist, angeordnet, um die Flocken zu verdichten, indem die Luft, in der die Flocken gemischt sind, entfernt wird,
- eine Zwangsdurchflusszelle (16), die mit der Verdichtungszelle (15) verbunden ist und Folgendes umfasst
- einen Empfangsbereich (91), der angeordnet ist, um die luftentzogenen Flocken und Prozessmaterialien aufzunehmen,
- eine Dosierschnecke (93), die von einem Motor (92) mit einer einstellbaren Geschwindigkeit in Abhängigkeit von dem von der Transport- und Wiegezelle (14) durchgeführten Wiegen in Drehung versetzt wird, und
- einen Entladebereich (94), der sich an der Basis der Zwangsdurchflusszelle (16) befindet und angeordnet ist, um einen konstanten und vorbestimmten Strom von Flocken und Prozessmaterialien zu dem Auslass zu zwingen, und
- eine Extrusionszelle (18), die mit der Zwangsdurchflusszelle (16) verbunden ist, umfassend
- einen mittleren Körper (82),
- mindestens einen Motor (81), dessen Geschwindigkeit in Abhängigkeit von dem von der Transport- und Wiegezelle (14) durchgeführten Wiegen einstellbar ist und der mit zwei Extrusionsschnecken (84) verbunden ist, die in einem Zylinder (83) umfasst sind, umfasst von dem mittleren Körper (82),
- mindestens eine seitliche Zuführungsleitung (17), die angeordnet ist, um dem Strom von Flocken und Prozessmaterialien, die aus der Zwangsdurchflusszelle kommen, mineralische Füllstoffe zuzuführen;
wobei in Verwendung die Extrusionszelle (18) angeordnet ist, um den Strom von Flocken, Prozessmaterialien und mineralischen Füllstoffen zu extrudieren, sodass das System (10), das mindestens die Komponenten oder die Zellen umfasst, angeordnet ist, um ein rückgewonnenes Kunststoffmaterial in Abwesenheit von Verdickungswasser zu erlangen.

7. System nach Anspruch 6, ferner umfassend, an dem Auslass der Extrusionszelle (18),
- eine Filterzelle (40), die angeordnet ist, um in Verwendung Substanzen aufzufangen, die auf das Verfahren (100) zurückzuführen sind, wobei die Substanzen in der Gruppe umfasst sind, die Öle aufgrund der Extrusion, chemische Rückstände und Pulver umfasst,
- eine Schneid- und Kühlzelle (43), die angeordnet ist, um das extrudierte Material zu schneiden, um ein rückgewonnenes Kunststoffmaterial mit vorbestimmten Eigenschaften zu erlangen, und das rückgewonnene Kunststoffmaterial zu kühlen,
- eine weitere Kühlzelle (44), umfassend eine Zentrifuge (44) und die angeordnet ist, um jegliches restliche Kühlwasser zu entfernen und das rückgewonnene Kunststoffmaterial zu trocknen.

8. System nach Anspruch 6 oder 7, ferner umfassend
- Wiegevorrichtungen (61, 62), die konfiguriert sind, um Prozessmaterialien, die Polypropylen-Rohstoffe bzw. Additive umfassen, der Zwangsdurchflusszelle (16) zuführen, und
- Wiegevorrichtungen (66), die konfiguriert sind, um die mineralischen Füllstoffe zu der mindestens einen seitlichen Zuführungsleitung (17) zu schicken.

## Revendications

1. Procédé permettant de récupérer un matériau plastique, en particulier un matériau plastique de polypropylène, comprenant en séquence au moins les étapes de
- (110) élimination des impuretés du matériau plastique à récupérer,
- (120) broyage et réduction du matériau dépourvu d'impuretés en flocons de taille prédéfinie,
- (130) transport des flocons sous forme de flocons mélangés à l'air vers une étape de mélange,
- (210) mélange au moyen d'une cellule de mélange (13) fonctionnant dans des conditions de turbulence et de forte suspension des flocons mélangés à l'air, ladite étape de mélange comprenant les étapes de
- remplissage d'une chambre (21) avec les flocons mélangés à l'air et activation dans le même temps d'un tapis (22) présent dans la chambre (21),
- transport des flocons mélangés à l'air jusqu'à un broyeur (24) au moyen du tapis (22),
- déplacement vertical des flocons mélangés à l'air au moyen du broyeur (24) de manière à mélanger et envoyer les flocons mélangés à l'air au moyen d'une trémie de déchargement (55) vers l'étape suivante,
- (220) transport, pesée et envoi vers l'étape suivante des flocons mélangés à l'air au moyen d'une cellule de transport et de pesée (14) comprenant un ou plusieurs tapis transporteurs (31, 32, 33), lesdits un ou plusieurs tapis transporteurs (31, 32, 33) étant déplacés de manière à synchroniser le mouvement des flocons mélangés à l'air à la fois dans la cellule de mélange (13) et dans la cellule de transport et de pesée (14),
- (230) compactage des flocons mélangés à l'air au moyen d'une cellule de compactage (15) agencée pour séparer les flocons de l'air et peser les flocons séparés de l'air,
- (240) fourniture au moyen d'une cellule à flux forcé (16) d'une alimentation forcée de matériaux, lesdits matériaux comprenant les flocons séparés de l'air, arrivant de l'étape de compactage et de pesée (230), et des matériaux de traitement et des additifs, lesdits matériaux de traitement et lesdits additifs étant fournis pour contribuer audit procédé de récupération,
- (250) extrusion au moyen d'une cellule d'extrusion (18) à la fois desdits matériaux sortant de la cellule à flux forcé (16) et des charges minérales, lesdites charges minérales étant prévues pour contribuer à terminer le procédé de récupération du matériau plastique.

2. Procédé selon la revendication 1, comprenant, suite à l'étape d'extrusion (250), les étapes supplémentaires de
- (260) filtration du matériau plastique récupéré au moyen d'une cellule de filtration (40), ladite étape de filtration étant prévue pour capturer toute substance due au procédé de récupération,
- (270) découpe du matériau plastique récupéré en composés de caractéristiques prédéfinies et refroidissement du matériau plastique récupéré au moyen d'une cellule de découpe et de refroidissement (43),
- (280) refroidissement et séchage supplémentaires du matériau plastique récupéré arrivant de l'étape de découpe et de refroidissement (270) au moyen d'une cellule de refroidissement et de séchage (44) de façon à fournir un produit fini prêt à être distribué et/ou vendu.

3. Procédé comprenant, parallèlement aux étapes de procédé prévues selon les revendications 1 ou 2, les étapes supplémentaires de
- (105) préparation et envoi dans la cellule à flux forcé (16) pourvue dans l'étape d'alimentation forcée (240),
- des matériaux de traitement comprenant les matières premières de polypropylène,
- les additifs compris dans le groupe comprenant les colorants, les fibres de verre et/ou dans le groupe comprenant les additifs agencés pour conférer des caractéristiques d'auto-extinction au matériau récupéré, et
- (107) préparation et envoi dans la cellule d'extrusion (18) pourvue dans l'étape d'extrusion (250)
- des charges minérales de traitement comprises dans le groupe comprenant le talc, le carbonate de calcium et/ou le chlorure de baryum.

4. Procédé selon l'une quelconque des revendications 1 à 3, ladite étape de réalisation d'une alimentation forcée de matériaux (240) comprenant les étapes de
- réception au niveau de l'entrée des flocons séparés de l'air, des matériaux de traitement et des additifs,
- mélange des matériaux comprenant les flocons séparés de l'air, des matériaux de traitement et des additifs et l'acheminement de force desdits matériaux, au moyen d'une vis doseuse (93) maintenue en rotation au moyen d'un moteur (92), jusqu'à la cellule d'extrusion (18) pourvue dans l'étape d'extrusion (250).

5. Procédé selon l'une quelconque des revendications 1 à 4, ladite étape d'extrusion (250) comprenant les étapes de
- insertion dans la cellule d'extrusion (18) des matériaux sortant de la cellule à flux forcé (16) et des charges minérales,
- extrusion, au moyen de deux vis (84) comprises à l'intérieur d'un cylindre (83), des matériaux sortant de la cellule à flux forcé (16) et des charges minérales en l'absence d'eau épaississante, de sorte qu'il soit possible d'obtenir avec une consommation électrique limitée, comprise notamment entre 0,12 et 0,15 kW/kg/h, une productivité comprise entre 2500 et 4000 kg/h, en fonction de la qualité du matériau plastique à récupérer.

6. Système conçu pour exécuter un procédé (100) pour récupérer un matériau plastique, comprenant au moins les cellules ou composants suivants
- un j oint rotatif (20) comprenant une courbure segmentée rotative (76) et conçu pour déplacer, dans des conditions de turbulence et de suspension, le matériau récupérable déchiqueté en flocons mélangés à l'air,
- une cellule de mélange et de transport (13), reliée au joint rotatif (20), et comprenant
- une chambre (21) agencée pour être remplie au moyen du joint rotatif (20) avec les flocons mélangés à l'air,
- un tapis (22) à la base de la chambre (21), et
- un broyeur (24) conçu pour recevoir les flocons mélangés à l'air et les envoyer vers une trémie de déchargement (55), au moyen de
- un tapis (53) dans lequel sont comprises une pluralité de broches saillantes (57), et
- un cylindre rotatif (54) agencé pour coopérer avec les broches saillantes (57),
- une cellule de transport et de pesée (14) reliée à la cellule de mélange et de transport (13) et comprenant au moins un tapis transporteur (31, 32, 33) agencé pour transporter et peser les flocons mélangés à l'air, et pour synchroniser le mouvement dudit au moins un tapis transporteur (31, 32, 33) avec le déplacement du tapis (22) en fonction de la pesée des flocons mélangés à l'air,
- une cellule de compactage (15), reliée à la cellule de transport et de pesée (14), agencée pour compacter les flocons, en éliminant l'air dans lequel les flocons sont mélangés,
- une cellule à flux forcé (16) reliée à la cellule de compactage (15) et comprenant
- une zone de réception (91) agencée pour recevoir les flocons exempts d'air et les matériaux de traitement,
- une vis doseuse (93) entraînée en rotation par un moteur (92) à une vitesse réglable en fonction de la pesée effectuée par la cellule de transport et de pesée (14), et
- une zone de déchargement (94) située à la base de la cellule à flux forcé (16) et agencée pour forcer un flux constant et prédéfini de flocons et de matériaux de traitement vers la sortie, et
- une cellule d'extrusion (18) reliée à la cellule à flux forcé (16), comprenant
- un corps central (82),
- au moins un moteur (81) à vitesse réglable en fonction de la pesée effectuée par la cellule de transport et de pesée (14) et relié à deux vis d'extrusion (84) comprises dans un cylindre (83) compris dans le corps central (82),
- au moins une ligne d'alimentation latérale (17) agencée pour alimenter en charges minérales le flux de flocons et de matériaux de traitement arrivant de la cellule à flux forcé ;
grâce à quoi, lors de l'utilisation, ladite cellule d'extrusion (18) est agencée pour extruder le flux de flocons, de matériaux de traitement et de charges minérales, de sorte que ledit système (10), comprenant au moins lesdits composants ou lesdites cellules, soit agencé pour obtenir un matériau plastique récupéré en l'absence d'eau épaississante.

7. Système selon la revendication 6 comprenant en outre, au niveau de la sortie de la cellule d'extrusion (18),
- une cellule de filtration (40) agencée pour capter, lors de l'utilisation, les substances dues au traitement (100), lesdites substances étant comprises dans le groupe comprenant les huiles dues à l'extrusion, les résidus chimiques et les poudres,
- une cellule de découpe et de refroidissement (43) agencée pour découper le matériau extrudé, de manière à obtenir un matériau plastique récupéré avec les caractéristiques prédéfinies, et pour refroidir le matériau plastique récupéré,
- une autre cellule de refroidissement (44) comprenant une centrifugeuse (44) et agencée pour éliminer toute eau de refroidissement résiduelle et pour sécher le matériau plastique récupéré.

8. Système selon la revendication 6 ou 7, comprenant en outre
- des dispositifs de pesée (61, 62) conçus pour envoyer des matériaux de traitement comprenant, respectivement, des matières premières de polypropylène et des additifs vers la cellule à flux forcé (16), et
- des dispositifs de pesée (66) conçus pour envoyer les charges minérales vers ladite au moins une ligne d'alimentation latérale (17).
